# EUROPEAN PATENT APPLICATION

(11) **EP 3 508 290 A1**
(43) Date of publication of application: **10.07.2019**
(21) Application number: 17846354.3
(22) Date of filing: 25.08.2017
(51) Int. Cl.: B22F 3/16, B22F 3/105, B33Y 10/00

(54) **METHOD FOR MANUFACTURING THREE-DIMENSIONAL MOLDING**

(30) Priority: 02.09.2016 JP 2016172058
(71) Applicant: Panasonic Intellectual Property Management Co., Ltd., Osaka-shi, Osaka 540-6207 (JP)
(72) Inventor: MORIMOTO, Masanori, Chuo-ku Osaka-shi, Osaka 540-6207 (JP); ABE,Satoshi, Chuo-ku Osaka-shi, Osaka 540-6207 (JP); NAKAMURA, Akifumi, Chuo-ku Osaka-shi, Osaka 540-6207 (JP); YOSHIDA, Norio, Chuo-ku Osaka-shi, Osaka 540-6207 (JP)
(74) Representative: Müller-Boré & Partner Patentanwälte PartG mbB
(86) International application number: PCT/JP2017/030580
(87) International publication number: WO 2018/043349

(57) **Abstract**

In order to provide a manufacturing method for a three-dimensional shaped object which is capable of obtaining a higher accurate three-dimensional shaped object, there is provided that a method for manufacturing a three-dimensional shaped object by alternate repetition of a powder-layer forming and a solidified-layer forming, the repetition comprising: (i) forming a solidified layer by irradiating a predetermined portion of a powder layer with a light beam, thereby allowing a sintering of the powder in the predetermined portion or a melting and subsequent solidification of the powder; and (ii) forming another solidified layer by forming a new powder layer on the formed solidified layer, followed by irradiation of a predetermined portion of the newly formed powder layer with the light beam, further comprising performing a monitoring for an appearance property of an irradiated spot upon a formation of the solidified layer, the irradiated spot being irradiated with the light beam.

## Description

### TECHNICAL FIELD

The disclosure relates to a method for manufacturing a three-dimensional shaped object. More particularly, the disclosure relates to a method for manufacturing a three-dimensional shaped object, in which a formation of a solidified layer is performed by an irradiation of a powder layer with a light beam.

### BACKGROUND OF THE INVENTION

Heretofore, a method for manufacturing a three-dimensional shaped object by irradiating a powder material with a light beam has been known (such method can be generally referred to as "selective laser sintering method") . The method can produce the three-dimensional shaped object by an alternate repetition of a powder-layer forming and a solidified-layer forming on the basis of the following (i) and (ii) :
(i) forming a solidified layer by irradiating a predetermined portion of a powder layer with a light beam, thereby allowing a sintering of the predetermined portion of the powder or a melting and subsequent solidification of the predetermined portion; and
(ii) forming another solidified layer by forming a new powder layer on the formed solidified layer, followed by similarly irradiating the powder layer with the light beam.

This kind of the manufacturing technology makes it possible to produce the three-dimensional shaped object with its complicated contour shape in a short period of time. The three-dimensional shaped object can be used as a metal mold in a case where inorganic powder material (e.g., metal powder material) is used as the powder material. While on the other hand, the three-dimensional shaped object can also be used as various kinds of models or replicas in a case where organic powder material (e.g., resin powder material) is used as the powder material.

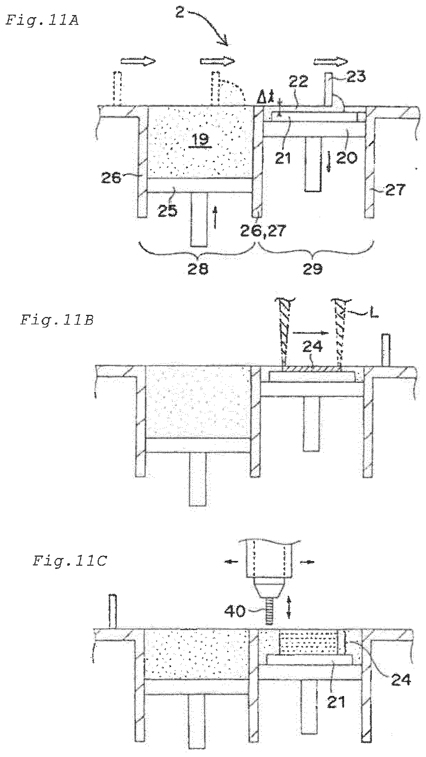

Taking a case as an example wherein the metal powder is used as the powder material, and the three-dimensional shaped object produced therefrom is used as the metal mold, the selective laser sintering method will now be briefly described. A powder is firstly transferred onto a base plate 21 by a movement of a squeegee blade 23, and thereby a powder layer 22 with its predetermined thickness is formed on the base plate 21 (see Fig. 11A). Then, a predetermined portion of the powder layer is irradiated with a light beam "L" to form a solidified layer 24 (see Fig. 11B). Another powder layer is newly provided on the solidified layer thus formed, and is irradiated again with the light beam to form another solidified layer. In this way, the powder-layer forming and the solidified-layer forming are alternately repeated, and thereby allowing the solidified layers 24 to be stacked with each other (see Fig. 11C). The alternate repetition of the powder-layer forming and the solidified-layer forming leads to a production of a three-dimensional shaped object with a plurality of the solidified layers integrally stacked therein. The lowermost solidified layer 24 can be provided in a state of adhering to the surface of the base plate 21. Therefore, there can be obtained an integration of the three-dimensional shaped object and the base plate. The integrated "three-dimensional shaped object" and "base plate" can be used as the metal mold as they are.

### PATENT DOCUMENTS (RELATED ART PATENT DOCUMENTS)

PATENT DOCUMENT 1: Japanese Unexamined Patent Application Publication No. 2004-277881

### DISCLOSURE OF THE INVENTION

### PROBLEMS TO BE SOLVED BY THE INVENTION

Upon a formation of the solidified layer, a a particular phenomenon due to the selective laser sintering method may arise. Specifically, when a predetermined portion of the powder layer is irradiated with the light beam for a formation of the solidified layer, so-called a sputter and/or a fume may occur due to the light beam irradiation. The inventors of the present application have found that a behavior of the sputter and/or the fume may change depending on an absorption amount of a light beam-energy by the powder at a predetermined portion of the powder layer. Specifically, the number of the sputter and an amount of the fume become relatively large, and a size of the sputter becomes relatively large depending on the absorption amount of the light beam-energy of the powder at the predetermined portion of the powder layer. A relatively large number of the sputters and the fume having relatively large amount and the sputter having the relatively large size may cause the light beam-irradiation to be obstructed. Thus, a desired new solidified layer cannot be suitably formed and thus a high accurate three-dimensional shaped object may not be finally obtained.

Under these circumstances, the present invention has been created. That is, a main object of the present invention is to provide a manufacturing method for a three-dimensional shaped object which is capable of obtaining a higher accurate three-dimensional shaped object.

### MEANS FOR SOLVING THE PROBLEMS

In order to achieve the above object, an embodiment of the present invention provides a method for manufacturing a three-dimensional shaped object by alternate repetition of a powder-layer forming and a solidified-layer forming, the repetition comprising:
(i) forming a solidified layer by irradiating a predetermined portion of a powder layer with a light beam, thereby allowing a sintering of the powder in the predetermined portion or a melting and subsequent solidification of the powder; and
(ii) forming another solidified layer by forming a new powder layer on the formed solidified layer, followed by irradiation of a predetermined portion of the newly formed powder layer with the light beam,
further comprising performing a monitoring for an appearance property of an irradiated spot upon a formation of the solidified layer, the irradiated spot being irradiated with the light beam.

### EFFECT OF THE INVENTION

According to an embodiment of the present invention, a higher accurate three-dimensional shaped object can be obtained.

### BRIEF DESCRIPTION OF THE DRAWINGS

Fig. 1A is a cross-sectional view schematically showing an embodiment wherein an appearance property of an irradiated spot is monitored in a normal fume/sputter occurrence state.
Fig. 1B is a cross-sectional view schematically showing an embodiment wherein an appearance property of an irradiated spot is monitored in an abnormal fume/sputter occurrence state.
Fig. 2A is a cross-sectional view schematically showing an embodiment wherein a relatively high accurate solidified portion (i.e., a composition element of a solidified layer) is formed upon a light beam-irradiation.
Fig. 2B is a cross-sectional view schematically showing an embodiment wherein a relatively high accurate solidified portion (i.e., a composition element of a solidified layer) is formed upon a start of a powder melt.
Fig. 2C is a cross-sectional view schematically showing an embodiment wherein a relatively high accurate solidified portion (i.e., a composition element of a solidified layer) is formed in a state that an occurrence amount of the fume/sputter is small.
Fig. 2D is a cross-sectional view schematically showing an embodiment wherein a relatively high accurate solidified portion (i.e., a composition element of a solidified layer) is formed upon a formation of a solidified portion.
Fig. 3A is a cross-sectional view schematically showing an embodiment wherein a relatively low accurate solidified portion (i.e., a composition element of a solidified layer) is formed upon a light beam-irradiation.
Fig. 3B is a cross-sectional view schematically showing an embodiment wherein a relatively low accurate solidified portion (i.e., a composition element of a solidified layer) is formed upon a start of a powder melt.
Fig. 3C is a cross-sectional view schematically showing an embodiment wherein a relatively low accurate solidified portion (i.e., a composition element of a solidified layer) is formed in a state that an occurrence amount of the fume/sputter is small.
Fig. 3D is a cross-sectional view schematically showing an embodiment wherein a relatively low accurate solidified portion (i.e., a composition element of a solidified layer) is formed upon a formation of a solidified portion.
Fig. 4 is a cross-sectional view schematically showing an embodiment wherein numerical information on a color of a light occurring in an irradiated spot is obtained.
Fig. 5A is a cross-sectional view schematically showing an embodiment wherein a formation condition for a solidified layer is changed during a formation of the solidified layer by a change of a light beam-irradiation energy.
Fig. 5B is a cross-sectional view schematically showing an embodiment wherein a formation condition for a solidified layer is changed during a formation of the solidified layer by a change of a scan speed of a light beam.
Fig. 5C is a cross-sectional view schematically showing an embodiment wherein a formation condition for a solidified layer is changed during a formation of the solidified layer by a change of a spot diameter of a light beam.
Fig. 6A is a cross-sectional view schematically showing an embodiment wherein a formation condition for a solidified layer is changed between different layers by a change of a light beam-irradiation energy.
Fig. 6B is a cross-sectional view schematically showing an embodiment wherein a formation condition for a solidified layer is changed between different layers by a change of a scan speed of a light beam.
Fig. 6C is a cross-sectional view schematically showing an embodiment wherein a formation condition for a solidified layer is changed during a formation of the solidified layer by a change of a spot diameter of a light beam.
Fig. 7A is a cross-sectional view schematically showing an embodiment wherein a suitable solidified layer is formed by a removal of a contamination adhering to a light permeable window.
Fig. 7B is a cross-sectional view schematically showing an embodiment wherein a suitable solidified layer is formed by a change of a thickness of a powder layer.
Fig. 7C is a cross-sectional view schematically showing an embodiment wherein a suitable solidified layer is formed by a machining process of a bulge at an upper surface of a solidified layer.
Fig. 8 is a graph showing a difference of an average gray value of R, G and B values between an irradiation condition 1 and an irradiation condition 2.
Fig. 9 is a graph showing a difference of an average area value of R, G and B values between an irradiation condition 1 and an irradiation condition 2.
Fig. 10 is a graph showing a difference of an average area value of R, G and B values between an irradiation condition 3 and an irradiation condition 4.
Figs. 11A-11C are cross-sectional views schematically illustrating a laser-sintering/machining hybrid process for a selective laser sintering method.
Fig. 12 is a perspective view schematically illustrating a construction of a laser-sintering/machining hybrid machine.
Fig. 13 is a flow chart of general operations of a laser-sintering/machining hybrid machine.

### MODES FOR CARRYING OUT THE INVENTION

The present invention will be described in more detail with reference to the accompanying drawings. It should be noted that configurations/forms and dimensional proportions in the drawings are merely for illustrative purposes, and thus not the same as those of the actual parts or elements.

The term *"powder layer"* as used in this description means a "metal powder layer made of a metal powder" or "resin powder layer made of a resin powder", for example. The term *"predetermined portion of a powder layer"* as used herein substantially means a portion of a three-dimensional shaped object to be manufactured. As such, a powder present in such predetermined portion is irradiated with a light beam, and thereby the powder undergoes a sintering or a melting and subsequent solidification to form a shape of a three-dimensional shaped object. Furthermore, the term *"solidified layer"* substantially means a "sintered layer" in a case where the powder layer is a metal powder layer, whereas term *"solidified layer"* substantially means a "cured layer" in a case where the powder layer is a resin powder layer.

The directions of "upper" and "lower", which are directly or indirectly used herein, are ones based on a positional relationship between a base plate and a three-dimensional shaped object. The side in which the manufactured three-dimensional shaped object is positined with respect to the base plate is "upper", and the opposite direction thereto is "lower". The "vertical direction" described herein substantially means a direction in which the solidified layers are stacked, and corresponds to "upper and lower direction" in drawings. The "horizontal direction" described herein substantially means a direction vertical to the direction in which the solidified layers are stacked, and corresponds to "right to left direction" in drawings.

### [Selective Laser Sintering Method]

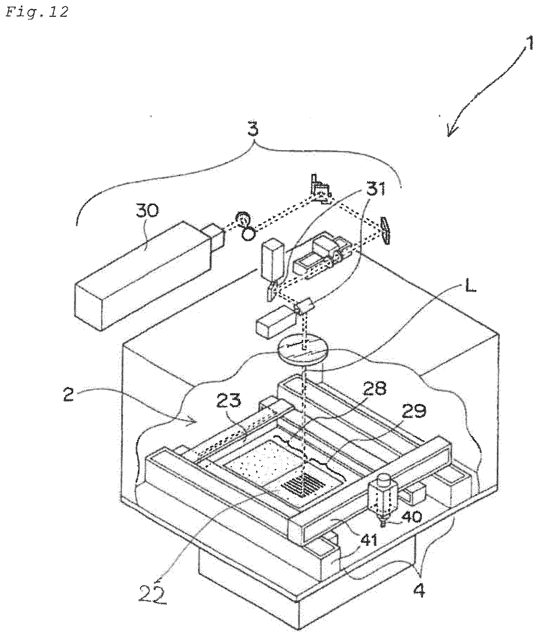

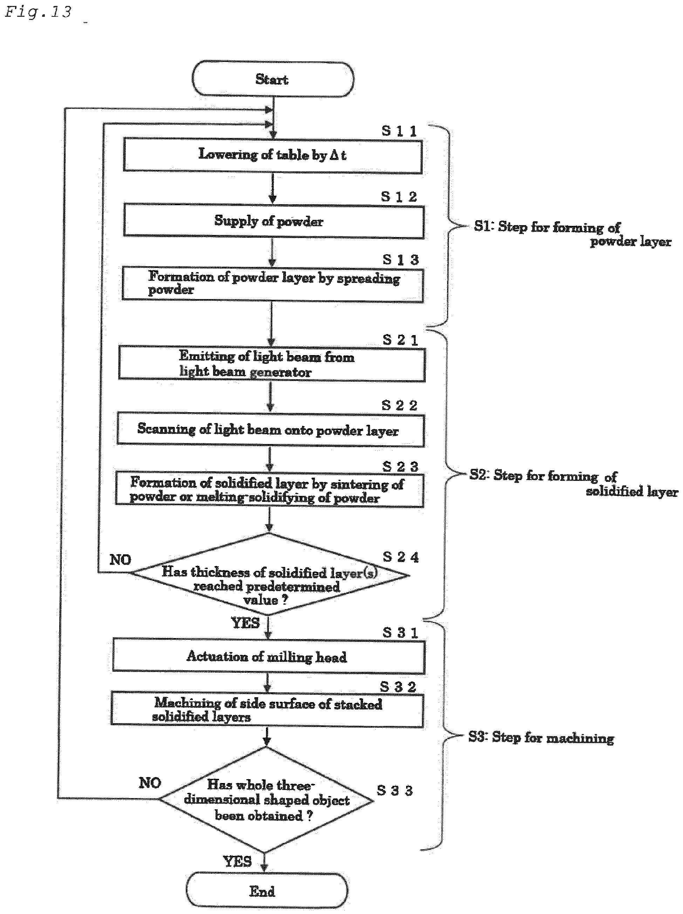

First of all, a selective laser sintering method, on which an embodiment of the manufacturing method of the present invention is based, will be described. By way of example, a laser-sintering/machining hybrid process wherein a machining is additionally carried out in the selective laser sintering method will be especially explained. Figs. 11A-11C schematically show a process embodiment of the laser-sintering/machining hybrid. Figs. 12 and 13 respectively show major constructions and operation flow regarding a metal laser sintering hybrid milling machine for enabling an execution of a machining process as well as the selective laser sintering method.

As shown in Fig. 12, the laser-sintering/milling hybrid machine 1 is provided with a powder layer former 2, a light-beam irradiator 3, and a machining means 4.

The powder layer former 2 is a means for forming a powder layer with its predetermined thickness through a supply of powder (e.g., a metal powder or a resin powder). The light-beam irradiator 3 is a means for irradiating a predetermined portion of the powder layer with a light beam "L". The machining means 4 is a means for milling the side surface of the stacked solidified layers, i.e., the surface of the three-dimensional shaped object.

As shown in Figs. 11A-11C, the powder layer former 2 is mainly composed of a powder table 25, a squeegee blade 23, a forming table 20 and a base plate 21. The powder table 25 is a table capable of vertically elevating/descending in a "storage tank for powder material" 28 whose outer periphery is surrounded with a wall 26. The squeegee blade 23 is a blade capable of horizontally moving to spread a powder 19 from the powder table 25 onto the forming table 20, and thereby forming a powder layer 22. The forming table 20 is a table capable of vertically elevating/descending in a forming tank 29 whose outer periphery is surrounded with a wall 27. The base plate 21 is a plate for a three-dimensional shaped object. The base plate is disposed on the forming table 20 and serves as a platform of the three-dimensional shaped object.

As shown in Fig. 12, the light-beam irradiator 3 is mainly composed of a light beam generator 30 and a galvanometer mirror 31. The light beam generator 30 is a device for emitting a light beam "L". The galvanometer mirror 31 is a means for scanning an emitted light beam "L" onto the powder layer, i.e., a scan means of the light beam "L".

As shown in Fig. 12, the machining means 4 is mainly composed of an end mill 40 and an actuator 41. The end mill 40 is a machining tool for milling the side surface of the stacked solidified layers, i.e., the surface of the three-dimensional shaped object. The actuator 41 is a driving means for allowing the end mill 40 to move toward the position to be machined.

Operations of the laser sintering hybrid milling machine 1 will now be described in detail. As can be seen from the flowchart of Fig. 13, the operations of the laser sintering hybrid milling machine 1 are mainly composed of a powder layer forming step (S1), a solidified layer forming step (S2), and a machining step (S3). The powder layer forming step (S1) is a step for forming the powder layer 22. In the powder layer forming step (S1), first, the forming table 20 is descended by Δt (S11), and thereby creating a level difference Δt between an upper surface of the base plate 21 and an upper-edge plane of the forming tank 29. Subsequently, the powder table 25 is elevated by Δt, and then the squeegee blade 23 is driven to move from the storage tank 28 to the forming tank 29 in the horizontal direction, as shown in Fig. 11A. This enables a powder 19 placed on the powder table 25 to be spread onto the base plate 21 (S12), while forming the powder layer 22 (S13) . Examples of the powder for the powder layer include a "metal powder having a mean particle diameter of about 5 µm to 100 µm" and a "resin powder having a mean particle diameter of about 30 µm to 100 µm (e.g., a powder of nylon, polypropylene, ABS or the like". Following this step, the solidified layer forming step (S2) is performed. The solidified layer forming step (S2) is a step for forming a solidified layer 24 through the light beam irradiation. In the solidified layer forming step (S2), a light beam "L" is emitted from the light beam generator 30 (S21). The emitted light beam "L" is scanned onto a predetermined portion of the powder layer 22 by means of the galvanometer mirror 31 (S22). The scanned light beam can cause the powder in the predetermined portion of the powder layer to be sintered or be melted and subsequently solidified, resulting in a formation of the solidified layer 24 (S23), as shown in Fig. 11B. Examples of the light beam "L" include carbon dioxide gas laser, Nd:YAG laser, fiber laser, ultraviolet light, and the like.

The powder layer forming step (S1) and the solidified layer forming step (S2) are alternately repeated. This allows a plurality of the solidified layers 24 to be integrally stacked with each other, as shown in Fig. 11C.

When the thickness of the stacked solidified layers 24 reaches a predetermined value (S24), the machining step (S3) is initiated. The machining step (S3) is a step for milling the side surface of the stacked solidified layers 24, i.e., the surface of the three-dimensional shaped object. The end mill 40 is actuated in order to initiate an execution of the machining step (S31). For example, in a case where the end mill 40 has an effective milling length of 3 mm, a machining can be performed with a milling depth of 3 mm. Therefore, supposing that "Δt" is 0.05 mm, the end mill 40 is actuated when the formation of the sixty solidified layers 24 is completed. Specifically, the side face of the stacked solidified layers 24 is subjected to the surface machining (S32) through a movement of the end mill 40 driven by the actuator 41. Subsequent to the surface machining step (S3), it is judged whether or not the whole three-dimensional shaped object has been obtained (S33) . When the desired three-dimensional shaped object has not yet been obtained, the step returns to the powder layer forming step (S1). Thereafter, the steps S1 through S3 are repeatedly performed again wherein the further stacking of the solidified layers 24 and the further machining process therefor are similarly performed, which eventually leads to a provision of the desired three-dimensional shaped object.

### [Manufacturing Method of the Present Invention]

An embodiment of the present invention is characterized by a formation embodiment of the solidified layer.

Specifically, in the present invention, an appearance property of an irradiated spot 50 is monitored upon a formation of the solidified layer 24, the spot 50 being irradiated with the light beam L.

The phrase "irradiated spot 50" as used herein means a local region including a region irradiated with the light beam L and a peripheral region thereof in a broad sense, and a region irradiated with the light beam L and a space region substantially above the region in a narrow sense. The phrase "appearance property" as used herein means a color, a brightness, and size of a predetermined portion observed from an outside. The phrase "monitoring" as used herein means an observation or a watching of the appearance property of the irradiated spot from an outside. Furthermore, the phrase "region irradiated with the light beam corresponding to a light beam-irradiation region)" substantially means a predetermined portion of the powder layer irradiated with the light beam.

The inventors of the present application have found that a behavior of a sputter 60 and/or a fume 70 may change depending on an absorption amount of a light beam-energy by the powder 19 at the predetermined portion of the powder layer 22, the sputter 60 and/or the fume 70 being due to an irradiation of the predetermined portion of the powder layer 22 with the light beam L. More specifically, the inventors of the present invention have found that the behavior of the sputter 60 and/or the fume 70 may change depending on the absorption amount of the light beam-energy by the powder 19 at the predetermined portion of the powder layer 22 and also that an appearance property of the irradiated spot 50 may change depending on a change of the behavior of the sputter 60 and/or the fume 70. In this regard, details will be described.

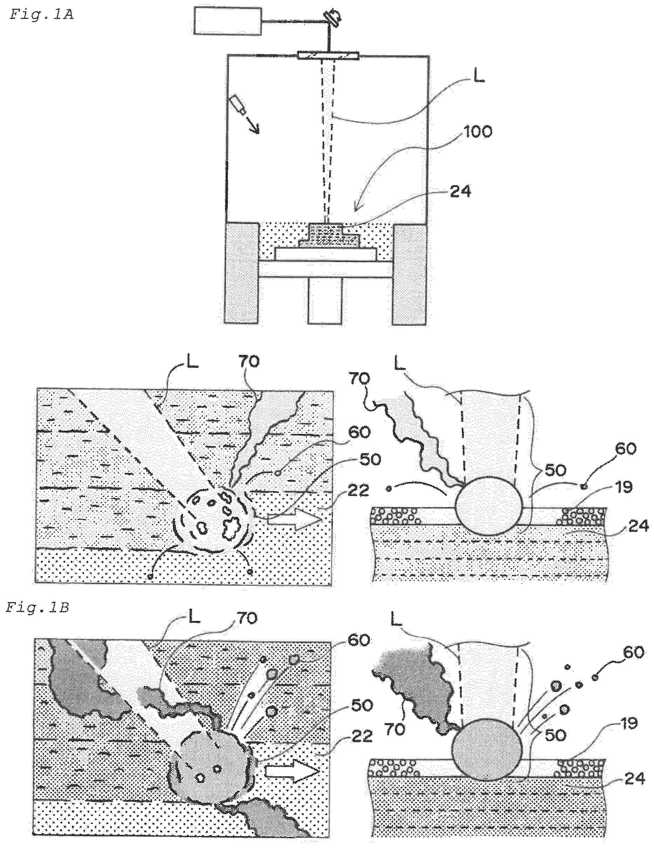

The appearance property of the irradiated spot 50 may be different in a case that the number of the sputter 60 is relatively small or a size of the sputter 60 is relatively small (see Fig. 1A) or in a case of no occurrence of the sputter, in comparison with a case that the number of the sputter is relatively large or the size of the sputter is relatively large (see Fig. 1B). In other words, the appearance property of the irradiated spot 50 may be different in the case that the number of the sputter is relatively large or the size of the sputter is relatively large, in comparison with the case that the number of the sputter is relatively small or the size of the sputter is relatively small or the case of no occurrence of the sputter. Similarly, the appearance property of the irradiated spot 50 may be different in a case that an amount of the fume 70 is relatively small (see Fig. 1A) or in a case of no occurrence of the fume 70, in comparison with a case that an amount of the fume 70 is relatively large (see Fig. 1B). In other words, the appearance property of the irradiated spot 50 may be different in the case that the amount of the fume 70 is relatively large in comparison with the case that the amount of the fume is relatively small or the case of no occurrence of the fume.

In light of the above matters, if the appearance property of the irradiated spot 50 is monitored and a change in the appearance property can be confirmed, it is possible to check a behavior change of the sputter 60 and/or the fume 70. Specifically, in a case that there is a change in the appearance property of the irradiated spot 50, it is possible to indirectly check that a property change of the sputter arises . Especially, it is possible to indirectly check a phenomenon that a large number of the sputters 60 occur or the sputter 60 having a larger size occurs. Similarly, in the case that there is the change in the appearance property of the irradiated spot 50, it is possible to indirectly check that a property change of the fume arises. Especially, it is possible to indirectly check a phenomenon that a larger amount of the fume 70 occurs. The check of the property change in the sputter 60 and the property change in the fume 70 makes it possible to indirectly check that an absorption amount of the light beam energy by the powder 19 at a predetermined portion of the powder layer 22 is different from that of the light beam energy by the powder 19 at another portion of the powder layer 22. The check of the property change in the sputter 60 and that of the property change in the fume 70 contributes to a check of an occurrence of an obstruction of the light beam irradiation at the predetermined portion of the powder layer 22. The check of the property change in the sputter 60 and that of the property change in the fume 70 enables actions for preventing the occurrence of the obstruction of the light beam irradiation at the predetermined portion of the powder layer 22 to be taken. Namely, the check of the property change in the sputter 60 and that of the property change in the fume 70 enables actions for suitably irradiating the predetermined portion of the powder layer 22 with the light beam L to be taken. As a result, a more suitble formation of a desired solidified layer is possible, and thus a higher accurate three-dimensional shaped object can be finally obtained.

In the present invention, as described above, it is possible to more suitaly check a behavior change of the sputter 60 and/or the fume 70 based on the change in the appearance property of the irradiated spot 50 at the local region. The check of the behavior change can result from a confirmation of only the change in the appearance property of the irradiated spot 50 at the local region. This means that an extensive confirmation is not required. The sputter 60 and/or the fume 70 may generally have a property of expanding extensively with a passing of a predetermined time after the light beam L-irradiation. In this regard, in the present invention, there is no need to check the whole of sputter 60 and/or the fume 70 expanding extensively. Therefore, it is possible to take quick actions for the suitable light beam L-irradiation in the present invention, in comparison with a direct check of the behavior of the sputter 60 and/or the fume 70.

In the present invention, a color of a light as the appearance property of the irradiated spot 50 may be monitored, the light occurring in the irradiated spot 50.

As described above, the appearance property of the irradiated spot 50 may change depending on the change of the behavior of the sputter 60 and/or the fume 70 when the behavior of the sputter 60 and/or the fume 70 may change depending on the absorption amount of the light beam-energy by the powder 19 at the predetermined portion of the powder layer 22. Especially, the inventors of the present application have found that a color of a light arsing in the irradiated spot 50 may change when the behavior of the sputter 60 and/or the fume 70 may change depending on the absorption amount of the light beam-energy by the powder 19 at the predetermined portion of the powder layer 22.

Although not being bound by any particular theory, it is conceivable that the color itself of the light occurring in the irradiated spot 50 is due to a gas which may occur upon the irradiation of the predetermined portion of the powder layer 22 with the light beam L and/or a melt material 80 which may be formed by the irradiation of the predetermined portion of the powder layer 22 with the light beam L.

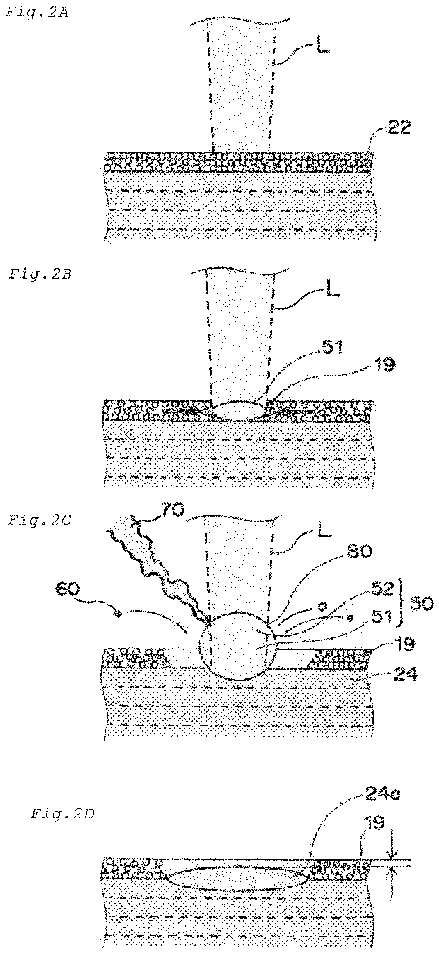

Hereinafter, an embodiment wherein a relatively higher accurate solidified portion (i.e., a composition element of a solidified layer) is formed will be described hereinafter (see Fig. 2).

Firstly, an irradiation of a predetermined portion of a newly formed powder layer 22 with the light beam L is started (see Fig. 2A), and thus the powder 19 at the light beam L-irradiation region 51 is melt by an irradiation heat of the light beam L (See Fig. 2B). In this embodiment, when the irradiation of the light beam L is continued, the powder 19 at the predetermined portion of the powder layer 22 may suitably absorb an energy of the light beam L. Thus, a powder close to the powder 19 in the irradiation region 51 of the light beam L and the solidified layer 24 corresponding to a base material located below the irradiation region 51 of the light beam L are suitably melted by the irradiation heat of the light beam L, and then a melt material 80 having a substantial spherical form may be formed by a surface tension, the melt material being of the powders 19 (see Fig. 2C). In this embodiment, upon an formation of the melt material 80, due to a suitable absorption of the light beam L-energy by the powder 19 at the predetermined portion of the powder layer 22, the number of the sputter 60 and the amount of the fume 70 are relatively small, and the size of the sputter 60 is relatively small, the sputter 60 and fume 70 being due to the irradiation of the light beam L. At this time, a light having a predetermined color may arise in the irradiated spot 50 which is composed of the irradiation region 51 of the light beam L and a peripheral region 52 thereof. Then, the melt material 80 having the substantially spherical form wets and spreads on the solidified layer 24 as a base material, and the wet and spread melt material 80 cools and subsequently solidifies. As a result, due to a suitable absorption of the light beam-energy by the powder 19 at the predetermined portion of the powder layer 22, a higher accurate solidified portion 24a can be formed, the solidified portion being a composition element of the solidified layer (see Fig. 2D). Therefore, it is possible to obtain a higher accurate new solidified layer which is composed of the solidified portion 24a.

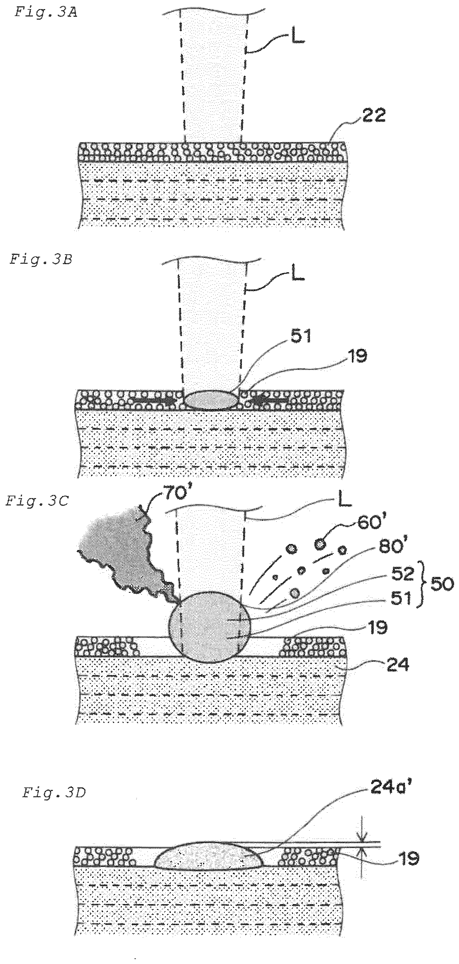

Next, compared with the embodiment shown in Fig. 2, an embodiment wherein a relatively lower accurate solidified portion (i.e., a composition element of a solidified layer) is formed will be described hereinafter (see Fig. 3).

Firstly, an irradiation of a predetermined portion of a newly formed powder layer 22 with the light beam L is started (see Fig. 3A), and thus the powder 19 at the light beam L-irradiation region 51 is melt by an irradiation heat of the light beam L (See Fig. 3B). In this embodiment, compared with the embodiment shown in Fig. 2, when the irradiation of the light beam L is continued, the powder 19 at the predetermined portion of the powder layer 22 is less likely to suitably absorb an energy of the light beam L. Thus, the solidified layer 24 corresponding to a base material located below the irradiation region 51 of the light beam L is less likely to be heated by the irradiation heat of the light beam L, and thus the solidified layer 24 below the irradiation region 51 of the light beam L is not suitably melted. As a result, a melt material 80' having a substantial spherical form is less likely to be formed in an already formed solidified layer 24, in comparison with the melt material 80 showin in Fig. 2C, the melt material 80' being formed by a surface tension and being of the powders 19 (see Fig. 3C) . In this embodiment, upon an formation of the melt material 80' , due to a non-suitable absorption of the light beam L-energy by the powder 19 at the predetermined portion of the powder layer 22, the number of the sputter 60' and the amount of the fume 70' are relatively large, and the size of the sputter 60' is relatively large, the sputter 60' and fume 70' being due to the irradiation of the light beam L. At this time, a light having a color different from the predetermined color shown in Fig. 2C may arise in the irradiated spot 50 which is composed of the irradiation region 51 of the light beam L and a peripheral region 52 thereof. Then, the melt material 80' having the substantially spherical form wets and spreads on the solidified layer 24 as a base material, and the wet and spread melt material 80' cools and subsequently solidifies. As a result, due to a non-suitable absorption of the light beam-energy by the powder 19 at the predetermined portion of the powder layer 22, a relatively lower accurate solidified portion 24a' may be formed, the solidified portion being a composition element of the solidified layer (see Fig. 3D) . Therefore, a relatively lower accurate new solidified layer which is composed of the solidified portion 24a' may be obtained.

In light of the above matters, the color of the light arsing in the irradiated spot 50 may change depending on the behavior change of the sputters 60, 60' and/or the fumes 70, 70' when the behavior of the sputters 60, 60' and/or the fumes 70, 70' may change depending on the absorption amount of the light beam-energy by the powder 19 at the predetermined portion of the powder layer 22 (see Fig. 2C and Fig. 3C). If the color of the light arising in the irradiated spot 50 is monitored and a change of the color of the light can be confirmed, a behavior change of the sputter and/or the fume can be suitably checked. Therefore, the check of the change in the color of the light of the irradiated spot 50 makes it possible to take suitable actions in light of the behavior of sputter and/or fume.

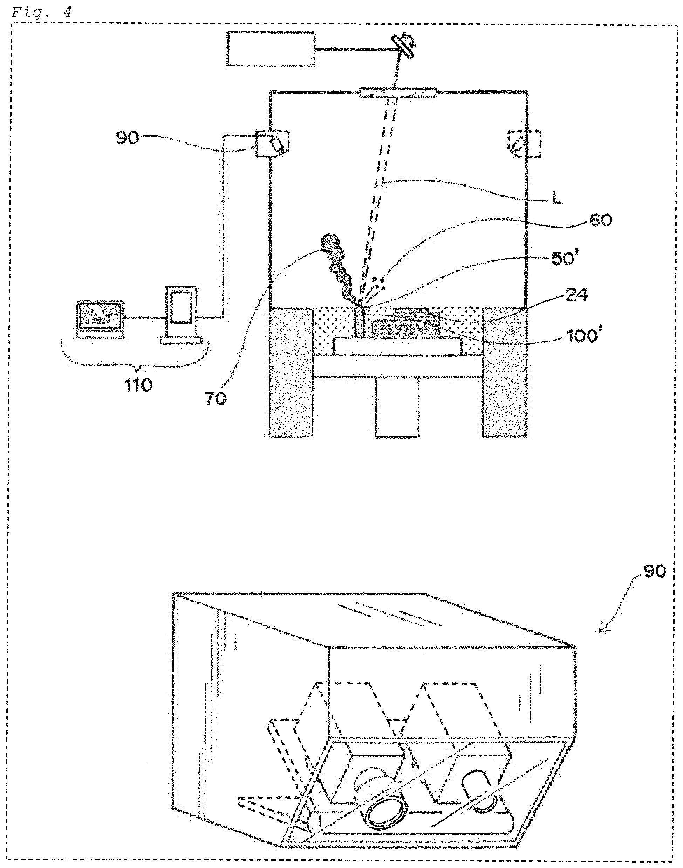

In an embodiment of the present invention, a color of a light arising in an irradiated spot may be photographed and numerical information on the color of the light may be obtained based on image data on a photographed color of the light (see Fig. 4).

As described above, the color of the light arising in the irradiated spot may change depending on the behavior change of the sputter and/or the fume when the behavior of the sputter and/or the fume may change depending on the absorption amount of the light beam-energy by the powder at the predetermined portion of the powder layer. In this embodiment, the numerical information on the color of light arising in the irradiated spot is obtained. Thus, it is possible to perform a quantitative evaluation of the color of light arising in the irradiated spot, and thus a higher accurate evaluation on the color of the light can be achieved.

For example, as shown in Fig. 4, by using a photographing means 90 having a digital camera, a RGB camera, an infrared camera, and/or a CCD camera therein, a color of a light occurring in an irradiated spot 50' of a sample part 100' is photographed, the sample part 100' being located near a formation region of the solidified layer 24 which is a composition element of a three dimensional shaped object. After photographing, the numerical information on the color of the light may be obtained based on image data of a color of a photographed light by a computer device 110. Without being limited to this, an emission spectrum on the color of the photographed light may be calculated using a spectrocolorimeter or the like and then the numerical information on the color of the light may be obtained by the computer device 110. If the numerical information can be obtained, it is possible to more suitably check a behavior change of the sputter 60 and/or the fume 70 based on a change in the numerical information on the color of the light which may occur in the irradiated spot 50' . Therefore, based on the change of the numerical information on the color of light which may occur in the irradiated spot 50' of the sample part 100', it is possible to take suitable actions in light of a behavior change of a sputter (not shown) and/or a fume (not shown) upon a formation of a new solidified layer on an already formed uppermost solidified layer 24, the already formed uppermost solidified layer 24 being a composition element of the three dimensional shaped object.

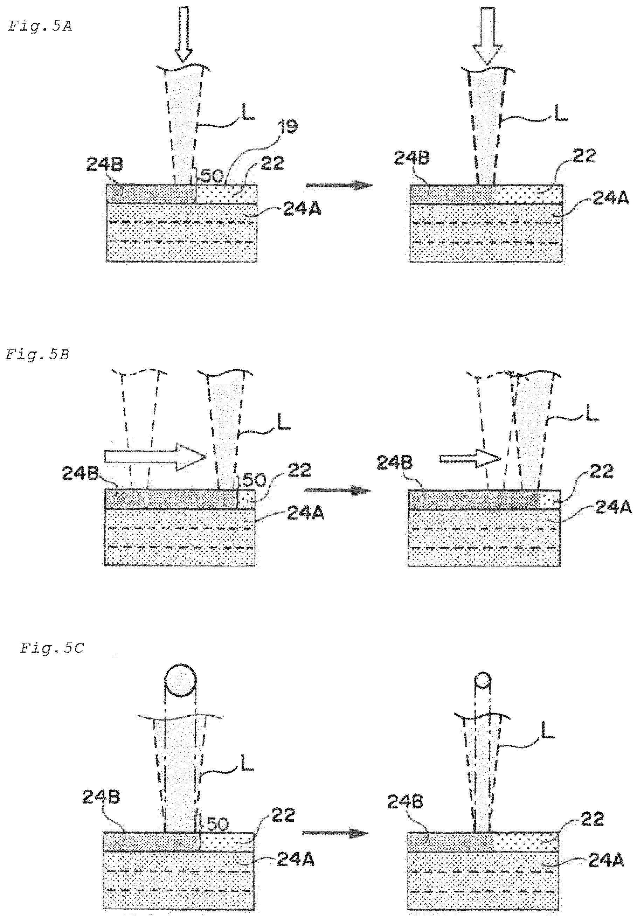

In an embodiment of the present invention, a formation condition for the solidified layer may be changed during a formation of the solidified layer in accordance with the appearance property of the irradiated spot (see Fig. 5).

In this embodiment, in a case that the appearance property of the irradiated spot changes in the formation process of a new solidified layer, it is judged that the number of sputter and the amount of fume may be relatively large and the size of the sputter may be relatively large, and thus a formation condition is changed during the formation of the layer. If the number of the sputter and the amount of the fume may be relatively large and the size of the sputter may be relatively large, a predetermined portion of the new powder layer cannot be suitably irradiated with the light beam, and thus a new single solidified layer may not be suitably formed. In this regard, the formation condition is intentionally changed during the formation of the new single solidified layer. Thus, it is possible to suitably form the new single solidified layer as a whole.

For example, as shown in Fig. 5, in a case that a new powder layer 22 is formed on an already formed uppermost solidified layer 24A and then a predetermined portion of the new powder layer 22 is irradiated with the light beam L to form a new single solidified layer 24B, the appearance property of the irradiated spot 50 (e.g., the color of the light occurring in the irradiated spot 50) is monitored during the formation of the new single solidified layer 24B. Then, it is confirmed whether or not the appearance property changes.

Upon the changing of the appearance property, it may be judged that the number of the sputter and the amount of the fume are relatively large, and the size of the sputter is relatively large. After the judgment, the irradiation condition of the light beam L may be suitably changed during the formation of the new single solidified layer 24B such that the new single solidified layer 24B is suitably formed as a whole.

While being not particularly limited, an irradiation energy of the light beam L may be increased during the formation of the new single solidified layer 24B as shown in Fig. 5A for example, to suitably form the new single solidified layer 24B as a whole. A scan speed of the light beam L may be decreased during the formation of the new single solidified layer 24B as shown in Fig. 5B for example, to suitably form the new single solidified layer 24B as a whole. In addition, a spot diameter of the light beam L may be decreased during the formation of the new single solidified layer 24B as shown in Fig. 5C for example, to suitably form the new single solidified layer 24B as a whole.

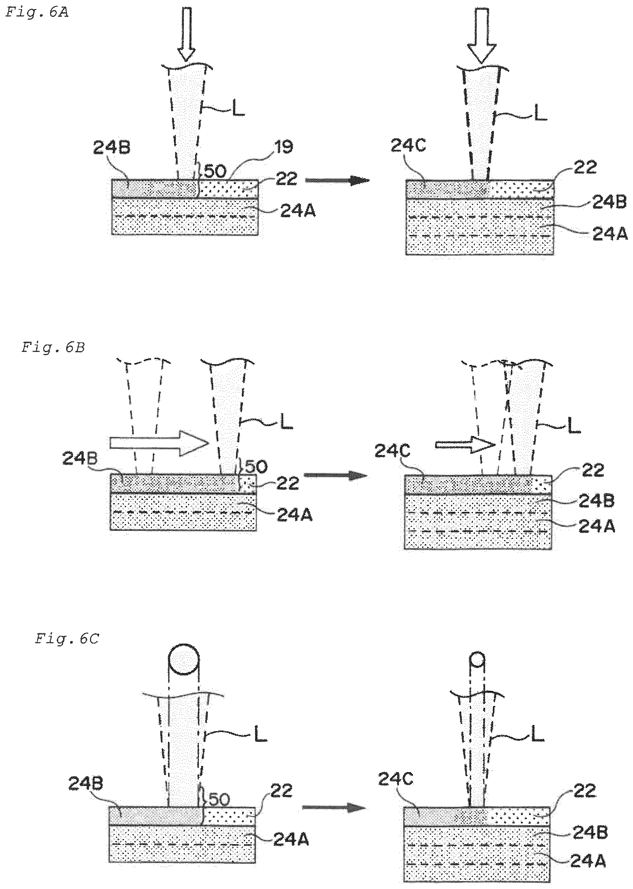

In an embodiment of the present invention, a formation condition for the solidified layer may be changed between different layers in accordance with the appearance property of the irradiated spot (see Fig. 6).

In this embodiment, if the appearance property of the irradiated spot changes in a process of forming a n-1th solidified layer, it is judged that the number of the sputter and the amount of the fume may be relatively large and the size of the sputter may be relatively large, and a forming condition of forming a nth or more solidified layer is changed. In the above previous embodiment, the formation condition of the new single solidified layer is intentionally changed during the formation of the new single solidified layer. In contrast, in this embodiment, the forming condition of forming the nth or more solidified layer is intentionally changed in a comparison with that of n-1th solidified layer. In this point, the above previous embodiment and this embodiment are different from each other. If the number of the sputter and the amount of the fume may be relatively large and the size of the sputter may be relatively large, a predetermined portion of the new powder layer cannot be suitably irradiated with the light beam, and thus nth or more new solidified layer may not be suitably formed. In this regard, the forming condition of forming the nth or more solidified layer is intentionally changed in a comparison with that of n-1th solidified layer. Thus, it is possible to suitably form the nth or more new single solidified layer.

For example, as shown in Fig. 6, in a case that a new solidified layer 24B is formed on an already formed uppermost solidified layer 24A and then a new solidified layer 24C is further formed on the formed solidified layer 24B, the appearance property of the irradiated spot 50 (e.g., the color of the light occurring in the irradiated spot 50) is monitored during the formation of the new solidified layer 24B. Then, it is confirmed whether or not the appearance property changes.

Upon the changing of the appearance property changes, it may be judged that the number of the sputter and the amount of the fume are relatively large and the size of the sputter is relatively large. After the judgment, the irradiation condition of the light beam L for a formation of the new solidified layer 24C may be suitably changed in a comparison with the irradiation condition of the light beam L for a formation of the solidified layer 24B such that the new solidified layer 24C is suitably formed as a whole on the solidified layer 24B where the appearance property of the irradiated spot 50 was monitored.

While being not particularly limited, the irradiation energy of the light beam L for the formation of the new solidified layer 24C may be increased in a comparison with the irradiation energy of the light beam L for the formation of the solidified layer 24B as shown in Fig. 6A to suitably form the new solidified layer 24C. While being not particularly limited, the scan speed of the light beam L upon the formation of the new solidified layer 24C may be decreased in a comparison with the scan speed of the light beam L upon the formation of the solidified layer 24B as shown in Fig. 6B to suitably form the new solidified layer 24C. While being not particularly limited, the spot diameter of the light beam L upon the formation of the new solidified layer 24C may be decreased in a comparison with the spot diameter of the light beam L upon the formation of the solidified layer 24B as shown in Fig. 6C to suitably form the new solidified layer 24C.

Without being limited to the above embodiments, the following embodiment may be adopted for example to suitably form the solidified layer.

As described above, when the appearance property of the irradiated spot changes in the process of the monitoring, a phenomenon that the number of the sputter and the amount of the fume may be relatively large and the size of the sputter may be relatively large, substantially occurs.

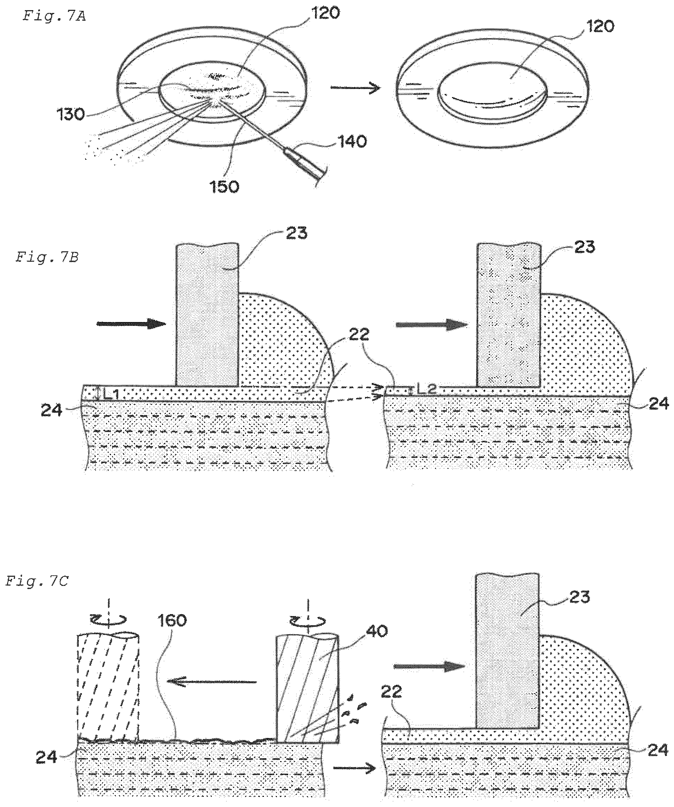

When the phenomenon occurs, a contamination 130 caused by the fume may adhere to a light permeable window 120 through which the light beam passes as shown in Fig. 7A. Thus, the predetermined portion of the powder layer cannot be suitably irradiated with the light beam via the light permeable window 120 due to the contamination 130 of the light permeable window 120.

In light of the above matters, in one embodiment, as shown in Fig. 7A, air 150 may be blown toward the light permeable window 120 to which the contamination 130 is adhered using an air spray 140 for example. The blowing allows the contamination 130 adhering to the light permeable window 120 to be suitably blown off. Thus, the contamination 130 does not adhere to the light permeable window 120, and thus the predetermined portion of the powder layer can be suitably irradiated with the light beam via the light permeable window 120. Therefore, a desired solidified layer can be suitably formed.

As described above, when the appearance property of the irradiated spot changes in the process of the monitoring, the phenomenon that the number of the sputter and the amount of the fume may be relatively large and the size of the sputter may be relatively large occurs substantially. When the phenomenon occurs, the predetermined portion of the new powder layer may not be suitably irradiated with the light beam.

In light of the above matters, in one embodiment, as shown in Fig. 7B, a thickness of a new powder layer 22 is made smaller from L₁ to L₂ (<L₁), the new powder layer 22 being formed on the already formed uppermost solidified layer 24 by using the squeegee blade 23. The smaller thickness of the new powder layer 22 makes it easy to transfer an irradiation energy of the light beam to the predetermined portion of the powder layer 22. Thus, a desired solidified layer can be suitably formed.

As described above, when the appearance property of the irradiated spot changes in the process of the monitoring, the phenomenon that the number of the sputter and the amount of the fume may relatively large and the size of the sputter may be relatively large occurs substantially. When the phenomenon occurs, the predetermined portion of the new powder layer may not be suitably irradiated with the light beam. As a result, as shown in Fig. 7C, a bulge 160 may occur due to a non-suitable irradiation of an upper surface of an already formed uppermost solidified layer 24 with the light beam.

In light of the above matters, in an embodiment, as shown in Fig. 7C, the bulge 160 may be subjected to a machine process by using the end mill 40 for example, the bulge 160 occurring at the upper surface of the already formed uppermost solidified layer 24. The machine process allows the upper surface of the solidified layer 24 to be flattened. Thus, a next new powder layer 22 can be formed on the flattened upper surface of the solidified layer 24, and thus a desired solidified layer can be suitably formed.

### EXAMPLES

Hereinafter, examples according to an embodiment of the present invention will be described.

### (Example 1)

The appearance property of the irradiated spot was monitored from an outside of a chamber. Specifically, a moving image of the color of the light arising in the irradiated spot was photographed from the outside of the chamber by using a digital camera (number of pixels: 2070000 pixels, frame rate: 29 fps) . In the working example 1, the following two conditions were used as irradiation conditions in the irradiated spot region.
- Irradiation condition 1 (Low speed/ High irradiation energy condition)
   Scan speed: 215 mm/s, Irradiation energy density: 99.2 J/mm³
- Irradiation condition 2 (High speed/ Low irradiation energy condition)
   Scan speed: 250 mm/s, Irradiation energy density: 73.1 J/mm³

Two to three still images in a same scan direction were extracted for each of the irradiation conditions 1 and 2. After extracting the still image, each extracted color still image was processed and converted into RGB image. After the process and conversion to the RGB image, an gray value at a maximum blob with its threshold value of 25 or more was calculated for each RGB image. After calculating each gray value, an average gray value was calculated based on each gray value.

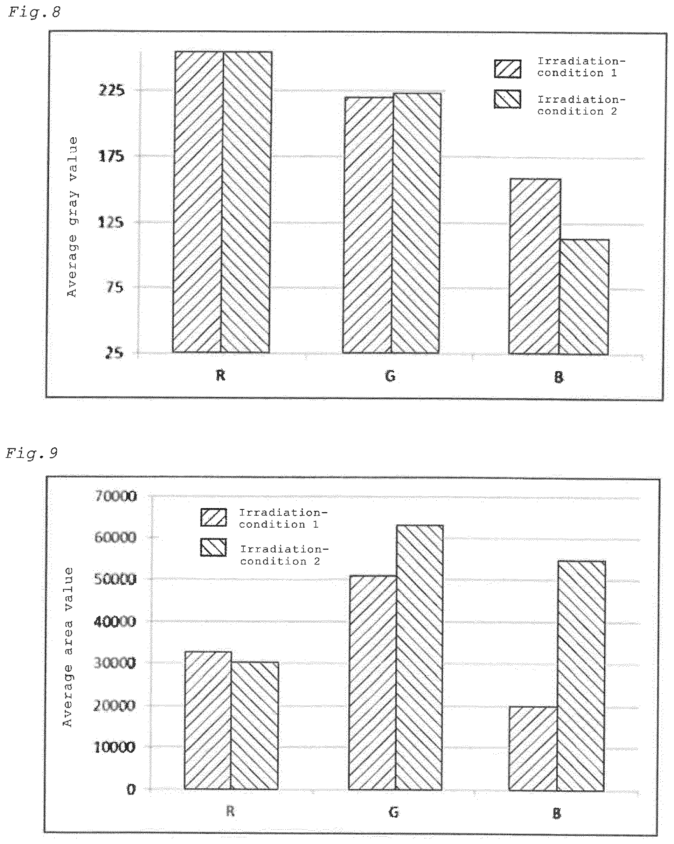

Its result is shown in Fig. 8.

As shown in Fig. 8, the average gray value of each of R value, G value and B value under irradiation condition 1 was compared with the average gray value of each of R value, G value and B value under irradiation condition 2. The average gray value of R value was about 255 in both irradiation conditions and was substantially the same value as each other. The average gray value of G value was about 220 in both irradiation conditions and was substantially the same value as each other. On the other hand, the average gray value of B value in the irradiation condition 1 was about 160, whereas the average gray value of B value in the irradiation condition 2 was about 115. Namely, it was found that the average gray value of B value under the irradiation condition 2 was about 0.7 times as much as that of B value under the irradiation condition 1. When there was a difference between the average gray value of the B value under the irradiation condition 1 and the average gray value of the B value under the irradiation condition 2 (i.e., there was a difference between the color of the light occurring in the irradiated spot under the irradiation condition 1 and the color of the light occurring in the irradiated spot under the irradiation condition 2), the number of the sputter, a size of the sputter and a fume amount in the irradiation condition 1 and those in the irradiation condition 2 were different from each other.

In light of the above matters, in a condition that the digital camera is used as the photographing means, when there is a difference in the number of the sputter and the size of the sputter, and the amount of the fume depending on the difference in the irradiation condition, it was found that there was a difference in the average gray value of the B value on the color of the light occurring in the irradiated spot depending on the difference in the number of the sputter and the size of the sputter, and the amount of the fume.

### (Example 2)

The appearance property of the irradiated spot was monitored from an outside of a chamber. Specifically, a moving image of the color of the light arising in the irradiated spot was photographed from the outside of the chamber by using a digital camera (number of pixels: 2070000 pixels, frame rate: 29 fps) . In the working example 1, the following two conditions were used as irradiation conditions in the irradiated spot region.
- Irradiation condition 1 (Large irradiation energy)
   Scan speed: 215 mm/s, Irradiation energy density: 99.2 J/mm³
- Irradiation condition 2 (Small irradiation energy)
   Scan speed: 250 mm/s, Irradiation energy density: 73.1 J/mm³

Two to three still images in a same scan direction were extracted for each of the irradiation conditions 1 and 2. After extracting the still image, each extracted color still image was processed and converted into RGB image. After the process and conversion to the RGB image, an area value at a maximum blob with its threshold value of 25 or more was calculated for each RGB image. After calculating each area value, an average area value was calculated based on each area value.

Its result is shown in Fig. 9.

As shown in Fig. 9, the average area value of each of R value, G value and B value under the irradiation condition 1 was compared with the average area value of each of R value, G value and B value under the irradiation condition 2. As shown in Fig. 9, the average area value of R value in the irradiation condition 1 was about 32000, whereas the average area value of R value in the irradiation condition 2 was about 30000. Namely, it was found that there was no significant change in the difference between the average area value of R value under the irradiation condition 1 and the average area value of R value under the irradiation condition 2.

On the other hand, as shown in Fig. 9, the average area value of G value under the irradiation condition 1 was about 51000, whereas the average area value of G value under the irradiation condition 2 was about 63500. Namely, it was found that the average area value of the G value under the irradiation condition 2 was about 1.25 times as much as that of the G value under the irradiation condition 1. Furthermore, as shown in Fig. 9, the average area value of the B value in the irradiation condition 1 was about 20000, whereas the average area value of the B value in the irradiation condition 2 was about 55000. Namely, it was found that the average area value of the B value under the irradiation condition 2 was about 2.75 times as much as that of the B value under the irradiation condition 1. When there was a difference between the average area value of each of the G value and B value under the irradiation condition 1 and the average area value of each of the G value and the B value under the irradiation condition 2 (i.e., there was a difference between a size of the light occurring in the irradiated spot under the irradiation condition 1 and a size of the light occurring in the irradiated spot under the irradiation condition 2), the number of the sputter, a size of the sputter and a fume amount in the irradiation condition 1 and those in the irradiation condition 2 were different from each other.

In light of the above matters, in a condition that the digital camera is used as the photographing means, when there is a difference in the number of the sputter and the size of the sputter, and the amount of the fume depending on the difference in the irradiation condition, it was found that there was a difference in the average area value each of of the G value and the B value on the size of the light occurring in the irradiated spot depending on the difference in the number of the sputter and the size of the sputter, and the amount of the fume.

### (Example 3)

The appearance property of the irradiated spot was monitored from an outside of a chamber. Specifically, a moving image of the color of the light arising in the irradiated spot was photographed from the outside of the chamber by using a RGB camera (number of pixels: 5 million pixels, frame rate: 20 fps, lens focal length: 75 mm, F value: 16). In the working example 1, the following two conditions were used as irradiation conditions in the irradiated spot region.
- Irradiation condition 3 (Large irradiation energy)
   Laser power: 320 W, Spot diameter: 0.3 mm, Scan speed: 300 mm/s, Irradiation energy density: 61.0 J/mm³
- Irradiation condition 2 (Small irradiation energy)
   Laser power: 160 W, Spot diameter: 0.1mm, Scan speed: 300 mm/s, Irradiation energy density: 61.0 J/mm³

Two to three still images in a same scan direction were extracted for each of the irradiation conditions 3 and 4. After extracting the still image, each extracted color still image was processed and converted into RGB image. After the process and conversion to the RGB image, an area value at a maximum blob with its threshold value of 25 or more was calculated for each RGB image. After calculating each area value, an average area value was calculated based on each area value.

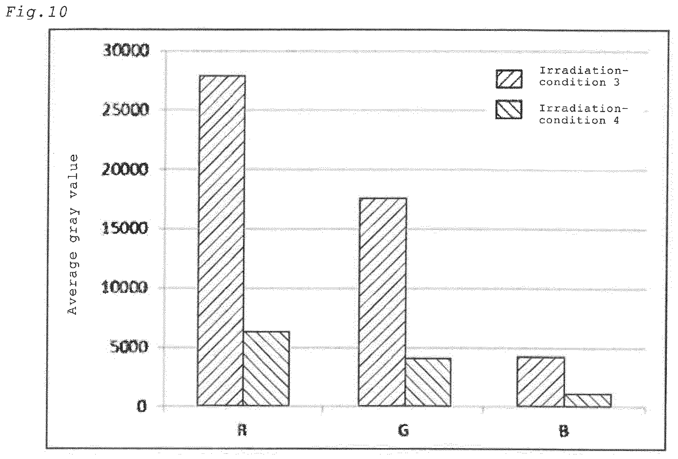

Its result is shown in Fig. 10.

As shown in Fig. 10, the average area value of each of R value, G value and B value under the irradiation condition 3 was compared with the average area value of each of R value, G value and B value under the irradiation condition 4. As shown in Fig. 10, the average area value of R value in the irradiation condition 3 was about 28000, whereas the average area value of R value in the irradiation condition 4 was about 6500. Namely, it was found that the average area value of the R value under the irradiation condition 4 was about 0.23 times as much as that of the R value under the irradiation condition 3.

As shown in Fig. 10, the average area value of G value under the irradiation condition 3 was about 17500, whereas the average area value of G value under the irradiation condition 4 was about 4000. Namely, it was found that the average area value of the G value under the irradiation condition 4 was about 0.23 times as much as that of the G value under the irradiation condition 3. Furthermore, as shown in Fig. 10, the average area value of the B value in the irradiation condition 3 was about 4000, whereas the average area value of the B value in the irradiation condition 4 was about 900. Namely, it was found that the average area value of the B value under the irradiation condition 4 was about 0.23 times as much as that of the B value under the irradiation condition 3. When there was a difference between the average area value of each of the G value and B value under the irradiation condition 3 and the average area value of each of the G value and the B value under the irradiation condition 4 (i.e., there was a difference between a size of the light occurring in the irradiated spot under the irradiation condition 3 and a size of the light occurring in the irradiated spot under the irradiation condition 4), the number of the sputter, a size of the sputter and a fume amount in the irradiation condition 3 and those in the irradiation condition 4 were different from each other.

In light of the above matters, in a condition that the RGB camera is used as the photographing means, when there is a difference in the number of the sputter and the size of the sputter, and the amount of the fume depending on the difference in the irradiation condition, it was found that there was a difference in the average area value each of of the G value and the B value on the size of the light occurring in the irradiated spot depending on the difference in the number of the sputter and the size of the sputter, and the amount of the fume.

Although some embodiments of the present invention have been hereinbefore described, these are merely typical examples in the scope of the present invention. Accordingly, the present invention is not limited to the above embodiments. It will be readily appreciated by the skilled person that various modifications are possible without departing from the scope of the present invention.

It should be noted that the present invention as described above includes the following aspects:
The first aspect: A method for manufacturing a three-dimensional shaped object by alternate repetition of a powder-layer forming and a solidified-layer forming, the repetition comprising:
   (i) forming a solidified layer by irradiating a predetermined portion of a powder layer with a light beam, thereby allowing a sintering of the powder in the predetermined portion or a melting and subsequent solidification of the powder; and
   (ii) forming another solidified layer by forming a new powder layer on the formed solidified layer, followed by irradiation of a predetermined portion of the newly formed powder layer with the light beam,
   wherein a monitoring for an appearance property of an irradiated spot is performed upon a formation of the solidified layer, the irradiated spot being irradiated with the light beam.
The second aspect: The method according to the first aspect, wherein a monitoring for a color of a light as the appearance property is performed, the light occurring in the irradiated spot.
The third aspect: The method according to the second aspect, wherein, upon the monitoring, the color of the light is photographed and numerical information on the color of the light is obtained based on image data on a photographed color of the light.
The fourth aspect: The method according to any one of the first to third aspects, wherein a formation condition for the solidified layer is changed during a formation of the solidified layer in accordance with the appearance property of the irradiated spot.
The fifth aspect: The method according to any one of the first to third aspects, wherein a formation condition for the solidified layer is changed between different layers in accordance with the appearance property of the irradiated spot.
The sixth aspect: The method according to any one of the first to fifth aspects, wherein a behavior of at least one of a sputter or a fume upon the light beam irradiation is checked, based on the appearance property of the irradiated spot.

### INDUSTRIAL APPLICABILITY

The manufacturing method according to an embodiment of the present invention can provide various kinds of articles. For example, in a case where the powder layer is a metal powder layer (i.e., inorganic powder layer) and thus the solidified layer corresponds to a sintered layer, the three-dimensional shaped object obtained by an embodiment of the present invention can be used as a metal mold for a plastic injection molding, a press molding, a die casting, a casting or a forging. While on the other hand in a case where the powder layer is a resin powder layer (i.e., organic powder layer) and thus the solidified layer corresponds to a cured layer, the three-dimensional shaped object obtained by an embodiment of the present invention can be used as a resin molded article.

### CROSS REFERENCE TO RELATED PATENT APPLICATION

The present application claims the right of priority of Japanese Patent Application No. 2016-172058 (filed on September 2, 2016, the title of the invention: "METHOD FOR MANUFACTURING THREE-DIMENSIONAL SHAPED OBJECT"), the disclosure of which is incorporated herein by reference.

### EXPLANATION OF REFERENCE NUMERALS

- 19: Powder
- 22: Powder layer
- 24: Solidified layer
- 24A: Solidified layer
- 24B: Solidified layer
- 24C: Solidified layer
- 50: Irradiated spot
- 50': Irradiated spot
- 60: Sputter
- 60': Sputter
- 70: Fume
- 70': Fume
- 100: Three-dimensional shaped object
- L: Light beam

## Claims

1. A method for manufacturing a three-dimensional shaped object by alternate repetition of a powder-layer forming and a solidified-layer forming, the repetition comprising:
(i) forming a solidified layer by irradiating a predetermined portion of a powder layer with a light beam, thereby allowing a sintering of the powder in the predetermined portion or a melting and subsequent solidification of the powder; and
(ii) forming another solidified layer by forming a new powder layer on the formed solidified layer, followed by irradiation of a predetermined portion of the newly formed powder layer with the light beam,
further comprising performing a monitoring for an appearance property of an irradiated spot upon a formation of the solidified layer, the irradiated spot being irradiated with the light beam.

2. The method according to claim 1, wherein a monitoring for a color of a light as the appearance property is performed, the light occurring in the irradiated spot.

3. The method according to claim 2, wherein, upon the monitoring, the color of the light is photographed and numerical information on the color of the light is obtained based on image data on a photographed color of the light.

4. The method according to claim 1, wherein a formation condition for the solidified layer is changed during a formation of the solidified layer in accordance with the appearance property of the irradiated spot.

5. The method according to claim 1, wherein a formation condition for the solidified layer is changed between different layers in accordance with the appearance property of the irradiated spot.

6. The method according to claim 1, wherein a behavior of at least one of a sputter or a fume upon the light beam irradiation is checked, based on the appearance property of the irradiated spot.
